# EUROPÄISCHE PATENTSCHRIFT

(11) **EP 2 664 645 B1**
(45) Veröffentlichungstag und Bekanntmachung des Hinweises auf die Patenterteilung: **17.01.2018**
(21) Anmeldenummer: 12167983.1
(22) Anmeldetag: 15.05.2012
(51) Int. Cl.: C08J 7/04, C08J 5/12, C09J 123/08, B29D 29/08, F16G 1/10, F16G 1/12, F16G 1/28, F16G 5/08, F16G 5/10, F16G 5/20

(54) **ELASTISCHER ARTIKEL, INSBESONDERE ANTRIEBSRIEMEN, MIT EINER BESCHICHTUNG**
ELASTIC ITEM, MORE PARTICULARLY DRIVE BELT, WITH A COATING
ARTICLE ÉLASTIQUE, EN PARTICULIER COURROIE D'ENTRAÎNEMENT, AVEC UN REVÊTEMENT

(43) Veröffentlichungstag der Anmeldung: 20.11.2013
(73) Patentinhaber: ContiTech Antriebssysteme GmbH, 30165 Hannover (DE)
(72) Erfinder: Kanzow, Henning, 30419 Hannover (DE); Greiner, Christian, 30167 Hannover (DE); Teves, Reinhard, 30926 Seelze (DE)
(74) Vertreter: Preusser, Andrea

(56) Entgegenhaltungen:
- EP-A1- 1 154 171
- WO-A1-2009/109434
- WO-A2-2007/099233
- DE-A1- 2 359 575
- US-A1- 2008 207 371

## Beschreibung

Die Erfindung betrifft einen Artikel mit einem elastischen Grundkörper auf der Basis eines Vulkanisates mit einer verschleißanfälligen Artikeloberfläche, die mit einer Beschichtung versehen ist. Der elastische Grundkörper ist zumeist noch mit einem eingebetteten Festigkeitsträger bzw. Zugträger versehen, der ein- oder mehrlagig ausgeführt sein kann.

Ein Artikel, der dynamischen Belastungen und somit einem Verschleiß wie auch Geräuschentwicklungen ausgesetzt ist, ist beispielsweise ein Antriebsriemen, Fördergurt oder Luftfederbalg, wobei der Antriebsriemen von besonderer Bedeutung ist. Der elastische Grundkörper des Antriebsriemens umfasst dabei eine Decklage als Riemenrücken und einen Unterbau mit einer Kraftübertragungszone.

Antriebsriemen als schwerpunktmäßiger Einsatzbereich werden zur Geräuschreduzierung wie auch zur Erhöhung der Abriebsbeständigkeit insbesondere im Bereich der Kraftübertragungszone mit einer Beschichtung versehen.

Verschiedene Beschichtungsarten sind hierfür bereits bekannt. In EP 1 431 358 A1 wird beispielsweise eine Lackbeschichtung auf Acrylat- und Polyurethanbasis offenbart. Diese Beschichtung ist auf manchen Motoren nicht dauerhaft, verbunden mit einem Verlust der Funktion durch Verschleiß. Darüber hinaus behindert auch die Zeit für die Lacktrocknung einen effizienten Herstellungsprozess.

Vliesbeschichtungen zum Teil mit zusätzlich eingelagertem Gleitmittel sind unter anderem aus US 6,793,599 B2, US 6,824,485 B2, US 6,609,990 B2 oder US 4,892,510 B1 bekannt. Klassische Vliese aus bei Vulkanisationsbedingungen nicht schmelzenden Materialien zeigen eine schlechte Abriebbeständigkeit, weswegen der Einsatz auf den Reibflächen als Verschleißschutz bei reibschlüssigen Antriebsriemen bei den meisten Anwendungen, beispielsweise beim Keilrippenriemen für KFZ-Anwendung, nicht ausreicht. Klassische Vliese sind ferner nicht ausreichend elastisch, um insbesondere das Ausformen von Keilrippenriemen im Formverfahren zu ermöglichen. Der dadurch hervorgerufene Vulkanisatdurchtritt kann das positive Geräuschverhalten verschlechtern.

In EP 2 166 251 A1, DE 10 2006 007 509 A1 oder DE 10 2008 055 497 A1 werden Textilauflagen zum Teil mit Kunststoff als Haftschicht bzw. Haftvermittler beschrieben. Textilauflagen sind sehr anfällig für einen Durchtritt von Kautschuk an der Riemenoberfläche. Dies kann Schiefstellungsgeräusche erzeugen. Des Weiteren ist die Herstellung von Textilauflagen in Form von Geweben oder Gestricken aufwendig und bietet insbesondere bei Baumwolle nur einen begrenzten Verschleißschutz.

Ein weiterer Nachteil ist hier, dass auf Prüfmotoren bei Feuchtigkeit Geräusche mit Keilrippenriemen mit Textilauflagen aus reinen Synthesefasern entstehen. Beschichtungen mit Fluorpolymer (teilweise mit Faseranteil) werden unter anderem in DE 44 00 434 A1 oder EP 1 396 658 A1 beschrieben. Nachteilig ist, dass die Beschichtung auf manchen Motoren nicht dauerhaft ist, verbunden mit einem Verlust der Funktion durch Verschleiß. Außerdem reagiert der Sprühprozess empfindlich auf die Änderung von Umgebungsbedingungen (Luftfeuchte, Temperatur). Darüber hinaus behindert die Zeit für Lacktrocknung einen effizienten Herstellungsprozess. Zusätzlich müssen diese Arten von Mischungsbeschichtungen sehr aufwendig hergestellt werden und sind sehr empfindlich in der Dauerhaltbarkeit bei tiefen Temperaturen.

Zur Geräuschreduzierung wird in WO 2004/011822 A1 beschrieben, die Rippenspitze mit einer Beschichtung aus Thermoplast zu versehen.

Aus DE 19801253 A1 ist zum Verschleißschutz bekannt, die Decklage eines Keilrippenriemens mit einem thermoplastischen Elastomer, insbesondere mit Polyethylen zu versehen.

Aus WO 02/084144 A1 ist insbesondere zur Abriebbeständigkeit bekannt, einen Zahnriemen mit einer thermoplastischen Oberflächenschicht aus UHMWPE (ultra high molecular weight Polyethylene) zu versehen. Eine derartige Beschichtung ist allerdings bei tiefen Temperaturen sehr spröde, so dass sie insbesondere für Keilrippenriemen nicht geeignet ist.

Aus US 2008/0207371 A1 wird ein Antriebsriemen, insbesondere ein Keilrippenriemen, mit einer Beschichtung in Form eines Films oder Folie aus 30 bis 90 % LDPE (low-density Polyethylene) offenbart, der sich durch ein gutes Abriebverhalten und ein optimiertes Geräuschverhalten auszeichnet. Diese Beschichtung führt im Formverfahren bei der Herstellung von Keilrippenriemen zu Ausformproblemen, gleichzeitig ist das Geräuschverhalten insbesondere bei Nässe und vor allem die Biegeflexibilität bei tiefen Temperaturen nicht immer ausreichend.

Die Vielzahl der Lösungsansätze für Beschichtungen von Antriebsriemen zeigt, dass die diesbezügliche Entwicklung noch nicht abgeschlossen ist. Bei anderen Artikeln mit einer verschleißanfälligen Oberfläche, beispielsweise bei Fördergurten und Luftfederbälgen, gibt es bislang weitaus weniger Entwicklungsbeiträge mit zufriedenstellenden Lösungsansätzen.

Im Rahmen einer Weiterentwicklung besteht die Aufgabe der Erfindung darin, einen Artikel mit wenigstens einer Beschichtung bereitzustellen, der sich durch eine Beschichtung mit guter Dauerhaltbarkeit, insbesondere bei niedrigen Temperaturen, d.h. durch eine verbesserte Kälteflexibilität, auszeichnet. Gleichzeitig soll der beschichtete Artikel eine gute Geräuschdämmung gewährleisten, insbesondere bei Feuchtigkeit auf der Artikeloberfläche, guten Verschleißschutz und hohe Reibbeiwerte aufweisen. Darüber hinaus soll eine einfache Beschichtungsherstellung realisiert werden, und zwar unter Verzicht auf Lösemittel und bei keinen Ablüftzeiten für Trockenprozesse.

Gelöst wird diese Aufgabe dadurch, dass die Beschichtung aus wenigstens einer Folie aufgebaut ist, wobei die Folie wenigstens 80 bis 100 Gew. -% eines linearen Polyethylens mit niedriger Dichte (LLDPE), d.h. einer Dichte bei 20°C zwischen 0,915 und 0,934 g/cm³, enthält und wobei die Folie derart beschaffen ist, dass diese bei der Vulkanisation schmilzt und dabei einen festen Haftverbund von Grundkörper und Beschichtung bildet.

Lineare Polyethylene mit sehr niedrigen Dichten werden als LLDPE oder auch als PE-LLD (gemäß DIN EN ISO 1043-1) bezeichnet. Die Dichte bei 20°C beträgt zwischen 0,915 und 0,934 g/cm³. Im Gegensatz zu den herkömmlichen Polyethylentypen HDPE und LDPE, die durch Vernetzung von reinem Ethen erzeugt werden, ist LLDPE ein Produkt der Copolymerisation von Ethen mit Alk-1-enen, die 3 bis 18 Kohlenstoffatome besitzen, insbesondere But-1-en, Hex-1-en und Oct-1-en. Dadurch entstehen nur kurzkettige Verzweigungen, die aber nicht gleichmäßig über die Moleküle verteilt sind und welche die geringe Dichte von LLDPE bedingen. Der Anteil an Alk-1-en in LLDPE beträgt 5 bis 12%. Im Vergleich zu herkömmlichem LDPE (low-density Polyethylene), welches nach dem Hochdruckverfahren hergestellt wird, erfolgt die Herstellung von LLDPE nach dem Ziegler-Natta-Verfahren. Hierbei werden lediglich geringe Drücke (zwischen 1 bis 50 bar) und niedrige Temperaturen (zwischen 20 bis 150°C) benötigt.

LLDPE besitzt eine höhere Flexibilität und bessere Dehnungseigenschaften als LDPE. LLDPE bietet weiterhin höhere Zugfestigkeit als LDPE, ebenso eine höhere Schlag- und Punktionsfestigkeit, wodurch die Foliendicke reduziert werden kann, was wiederum Ressourcen und Umwelt schont.

Das neue Beschichtungskonzept auf der Basis von LLDPE kommt insbesondere bei der Herstellung folgender Artikel zur Anwendung:

### - Antriebsriemen

Von besonderer Bedeutung ist der Antriebsriemen, der konstruktiv als Flachriemen, Keilriemen, Keilrippenriemen oder Zahnriemen ausgebildet sein kann. Sein Einsatz erstreckt sich auf den Fahrzeug- und Maschinenbau. Auch bei Aufzügen spielt er eine besondere Bedeutung. Eine zunehmend herausragende Bedeutung hat dabei der Keilriemen sowie insbesondere der Keilrippenriemen.

Besonders verschleißanfällig ist die Kraftübertragungszone, da dort der Riementrieb wirkt. Im Rahmen des neuen Beschichtungskonzeptes ist es wichtig, dass zumindest die Kraftübertragungszone mit einer Beschichtung versehen ist, die aus wenigstens einer Folie aufgebaut ist, wobei die Folie 80 bis 100 Gew. -% eines LLDPE enthält. Insbesondere bei Nassgeräuschen und der Dauerhaltbarkeit bei hohen und tiefen Temperaturen zeigt das neue Beschichtungskonzept seine positive Wirkung. Der Riemenrücken kann gegebenenfalls ebenfalls mit dieser neuen Beschichtung versehen werden, um einen verbesserten Verschleißschutz zu gewährleisten.

Bei der Endlosschließung eines Antriebsriemens kann zwischen den Stoßenden der Folienbeschichtung eine Lücke von 0 bis 7 mm gelassen werden. Bei Folien mit niedrigem Flächengewicht können bei nicht allzu großer dynamischer Beanspruchung die Enden auch überlappend ausgeführt werden. Alternativ kann die Folie auch mehrlagig aufgebracht werden.

### - Fördergurt

Ein Fördergurt umfasst eine tragseitige und laufseitige Deckplatte, wobei sämtliche Oberflächen verschleißanfällig sind. Bei der tragseitigen Deckplatte wird der Verschleiß durch das Fördermaterial, beispielsweise durch scharfkantige Erze, sowie bei der laufseitigen Deckplatte durch die Trommeln (Antriebstrommel, Umkehrtrommel, Umlenktrommel) sowie durch die Tragrollen hervorgerufen.

Die neue Beschichtung in Form wenigstens einer LLDPE-Folie erfasst hier vorzugsweise die tragseitige und laufseitige Deckplatte. Neben einem verbesserten Verschleißschutz wirkt die Folie hierbei auch schmutzabweisend.

### - Schlauch

Ein Schlauch ist ein mehrschichtiges Gebilde, umfassend eine verschleißanfällige Außenschicht und eine Innenschicht, die primär medienbeständig sein muss. Bei Transport von Gasen ist zudem eine Gasdiffusion zu verhindern. Die Verschleißanfälligkeit der Außenschicht ist insbesondere bei Großschläuchen, beispielsweise Schwimmschläuchen von Off-Shore-Anlagen, relevant. Bei einem Schlauch wird daher ausschließlich die Außenschicht mit der neuen Beschichtung aus wenigstens einer LLDPE-Folie ausgestattet. Eine Innenbeschichtung mit LLDPE kann sinnvoll sein, wenn abrasive Medien wie Suspensionen gefördert werden.

Für die Innenschicht (Inliner) sind spezielle medienbeständige wie auch gasundurchlässige Werkstoffe entwickelt worden. Diesbezüglich wird auf den umfassenden Stand der Schlauchtechnik verwiesen.

### - Luftfederbalg

Ein Luftfederbalg (Axialbalg, Kreuzlagenbalg) umfasst ebenfalls eine Außenschicht und Innenschicht. Dabei unterliegt die Außenschicht im Rahmen der Ein- und Ausfederung einem permanenten Verschleiß.

Die Außenschicht eines Luftfederbalges kann nun mit der neuen Beschichtung in Form wenigstens einer LLDPE-Folie ausgestattet werden.

### - Mehrschichtige Stoffbahn

Eine mehrschichtige Stoffbahn dient beispielsweise zur Bildung von Schutzanzügen, Zelten, Rettungsinseln und Übergangsbälgen. Bei Schutzanzügen, Zelten, Planen und Rettungsinseln ist die Außenschicht einem Verschleiß ausgesetzt. Hier ist es ausreichend, wenn nur die Außenschicht mit wenigstens einer LLDPE-Folie ausgestattet wird. Bei den zumeist faltenförmigen Übergangsbälgen (Fluggastbrücken, Übergangsbälge für Bahnen und Busse) ist es dagegen von Vorteil, wenn nicht nur die Außenschicht, sondern auch die Innenschicht mit der neuen Beschichtung versehen wird.

Im Folgenden wird auf vorteilhafte Werkstoff- und Gestaltungsvarianten der Beschichtung aus wenigstens einer LLDPE-Folie eingegangen.

Die Folie enthält 80 bis 100 Gew. -%, ganz besonders bevorzugt 90 bis 100 Gew.- %, wenigstens eines LLDPE. Besonders gute Eigenschaften insbesondere hinsichtlich der Kälteflexibilität werden erzielt, wenn die Beschichtungsfolie 100 Gew. -% LLDPE enthält.

Die Folie kann daher aus einem Verschnitt von wenigstens zwei Kunststoffen bestehen, bei der allerdings LLDPE in Mengen von wenigsten 80 Gew. -% vorliegen muss. Als weitere Kunststoffe kommen bspw. alle der fachkundigen Person bekannten Polyethylene (PE) in Frage. Insbesondere Polyethylen mit niedriger Dichte (LD-PE) oder mit hoher Dichte (HD-PE) oder mit hohem Molekulargewicht (HMW-PE) oder auch Polyethylenmischungen sind gut geeignet. Besonders vorteilhaft ist der Verschnitt mit HDPE. Denkbar sind auch Verschnitte von LLDPE mit Polypropylen (PP) und / oder Polyamid (PA).

Die Beschichtungsfolie kann ein- oder mehrlagig ausgebildet sein, d.h. aus einem einlagigen oder mehrlagigen Verbund von einzelnen Folien bestehen. Ist sie mehrlagig ausgebildet, so enthält wenigstens eine Folienschicht 80 bis 100 Gew. -% LLDPE. Die weiteren Folienschichten können dabei aus weiteren, bereits oben genannten PE-Typen und / oder PA und / oder PP und / oder aus Verschnitten der genannten bestehen.

So kann beispielsweise die Beschichtungsfolie zweilagig ausgebildet sein, mit einer unteren zum Riemengrundkörper weisenden Schicht enthaltend 80 bis 100 Gew. -% LLDPE und einer oberen nach außen weisenden Schicht aus PE mit Wachsadditiven, z. Bsp. aus Amidwachs, insbesondere Stearinsäureamide, Erucasäureamide, Ölsäureamide und Octensäureamide. Die Wachsadditive gelangen beim Vulkanisieren an die Oberfläche und führen hierbei zu einer weiteren Optimierung des Reibbeiwertes und zu einer leichteren Entformung im Riemenherstellprozess. Die Menge an Amidwachsen beträgt bevorzugt 0,05 bis 1 Gew.-%.

Wird eine höhere Härte der Außenschicht gewünscht, kann die äußerste Schicht auch mehrheitlich aus HD-PE oder HMW-PE bestehen. Die untere Schicht sollte dabei wenigstens aus 80 Gew. -% LLDPE bestehen.

Das LLDPE der Folie kann auch farbig ausgebildet sein. Dadurch ist es möglich, die Oberfläche des Riemens individuell nach Kundenwunsch farbig zu gestalten. Es sind dabei alle Farben und Farbnuancen möglich. Eine farbige Folie kann den Verarbeitungsprozess und das Erkennen von Produktionsfehlern erleichtern.

Das Flächengewicht der einlagigen oder mehrlagigen Beschichtungsfolie beträgt 1 bis 100 g/m², insbesondere 5 bis 40 g/m², insbesondere wiederum 10 bis 35 g/m². Das Flächengewicht der Beschichtungsfolie bezieht sich auf die eingesetzte Folie vor der Vulkanisation. Das Flächengewicht kann sich durch einen Einformvorgang bei der Vulkanisation verändern. Auf den Flanken von im Formverfahren hergestellten Keilrippenriemen findet man nach der Vulkanisation in etwa die Hälfte der eingesetzten Schichtdicke.

Darüber hinaus besteht die Möglichkeit, in die Beschichtungsfolie zusätzlich Partikel einzuarbeiten, insbesondere unter dem Aspekt der Reibbeiwertssenkung sowie der Beständigkeit gegenüber Chemikalien, Öle und Hitze. Diese Partikel können aus Silicon und/oder Polyurethan und/oder aus einem fluorhaltigen Kunststoff bestehen. Zu nennen sind als fluorhaltige Kunststoffe insbesondere Polyvinylfluorid (PVF), Polyvinylidenfluorid (PVDF) und Polytetrafluorethylen (PTFE). Von besonderer Bedeutung ist dabei PTFE. Auch Graphit oder Molybdänsulfid (MoS) kann eingemischt sein. Die Menge dieser reibbeiwertssenkenden Zusätze beträgt vorzugsweise 0,5 bis 10 Gew.-% bezogen auf das Gesamtgewicht der Folie.

Die einlagige oder mehrlagige Beschichtungsfolie besitzt eine Stärke von 0,001 bis 0,100 mm, insbesondere 0,005 bis 0,040 mm, insbesondere wiederum 0,01 bis 0,035 mm. Die Dicke der Beschichtungsfolie bezieht sich auf die eingesetzte Folie vor der Vulkanisation. Diese Dicke kann sich durch einen Einformvorgang bei der Vulkanisation verändern. Auf den Flanken von im Formverfahren hergestellten Keilrippenriemenfindet man nach der Vulkanisation in etwa die Hälfte der eingesetzten Schichtdicke.

Die Verwendung von LLDPE-Folien im Vergleich zu thermoplastisch verformbaren Vliesen ermöglicht außerdem eine konstantere Schichtdicke. Dies zeigt sich insbesondere in einer deutlich verbesserten Dauerhaltbarkeit bei dynamischer Verformung bei tiefen Temperaturen.

Der Grundkörper ist zumeist ein Vulkanisat auf der Basis einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluorkautschuk (FKM), Naturkautschuk (NR), Styrol-Butadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder HNBR oder ein Verschnitt der vorgenannten Kautschuktypen. Die vorgenannten Kautschuktypen kommen insbesondere bei Antriebsriemen zu Einsatz. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Das Vulkanisat ist insbesondere peroxidisch vernetzt, was in Verbindung mit der Kautschukmischung der oben genannten Art etwas näher erläutert wird. Die üblichen Vulkanisationstemperaturen liegen bei 130 bis 200 °C. Das schmelzende LLDPE der Folie benetzt die in Kontakt stehende Kautschukmischung und wird durch die Peroxide aus der Kautschukmischung mitvernetzt, wodurch ein fester Verbund zwischen der Kautschukmischung und der Folie entsteht.

In diesem Zusammenhang ist es von Vorteil, wenn die LLDPE-Folie vor der Vulkanisation 0,5 bis 5 Gew.-%, insbesondere 1 bis 4 Gew.-%, wenigstens eines Peroxides enthält. So wird die peroxidische Vernetzung der Folie verstärkt.

Im Folgenden wird nun eine Versuchsreihe anhand eines Keilrippenriemens mit PE-Beschichtungen beschrieben.

Es wurden eine Reihe von Keilrippenriemenwickel (PK1070) im Formverfahren aufgebaut. Die Unterbaumischung bestand dabei jeweils aus peroxidisch vernetzten EPDM. Der Unterbau der unvulkanisierten Rohwickel wurde mit den folgenden einlagigen, gelochten Beschichtungen belegt:
a) Folie aus HD-PE (30 g/m² Flächengewicht),
b) Folie aus 80% HD-PE und 20% LD-PE (20 g/m² Flächengewicht),
c) Folie aus LD-PE (20 g/m² Flächengewicht),
d) Folie aus LLDPE (20 g/m² Flächengewicht).

Alle PK-Rippen waren vollständig ausgeformt. In einem Kältedauerlauftest (VDA-Kälteprüfung mit einer Antriebsgeschwindigkeit von 1000 U/min und einer Umgebungstemperatur von -40°C (minus 40°C)) bekamen die Riemen a) und b) nach 24 Stunden Anrisse an den Rippenkopfkanten, während die Riemen c) und d) keine Defekte aufwiesen.

Riemen c) und d) wurden nacheinander auf einen Dieselmotor aufgelegt und Wasser in den Trieb bei laufendem Motor gespritzt. Während bei dem Riemen c) mit LDPE-Folie ein kurzes Quietschgeräusch beim Abtrocknen des Riemens auftrat, blieb der Riemen d) mit der LLDPE-Folie leise.

Insbesondere bei einem Antriebsriemen, insbesondere wiederum bei einem Keilrippenriemen, kommen bei dem neuen Beschichtungskonzept folgende Vorteile besonders zur Geltung:

### Artikeltechnische Vorteile

- Hohe Leistungsübertragung bei gleichzeitiger Unterdrückung von Laufgeräuschen;
- Einstellbarer hoher Reibbeiwert (CoF ≥ 2) bedingt hohes Leistungsübertragungspotential und ermöglicht so die Absenkung der Vorspannung;
- Hoher Verschleißschutz und hohe Lebensdauer;
- Guter Verschleißschutz bei Staubbelastung;
- Im Vergleich zu Vliesen zeigen sich keine Materialanhäufungen, welche die Lebensdauer insbesondere beim Einsatz bei niedrigen Temperaturen (unterhalb -40° C) herabsetzen;
- Hohe Biegeermüdungsresistenz, verbunden mit einer hohen Betriebsdauer.

### Finanzielle Vorteile

- Einsatz von sehr günstigen Folien statt teuren Vliesen oder statt teuren PU-PTFE-Beschichtungen sowie teuren Gestricken oder Geweben;
- Keine aufwendigen Fasermischungen.

### Produktionstechnische Vorteile

- Umweltfreundlich unter Verzicht von Lösemitteln;
- Rohwickel benötigen keine Ablüftzeiten;
- Keine unsicheren Lackierprozesse;
- Sehr gute Reproduzierbarkeit;
- Saubere Produktion, da kein Textilflock notwendig wie bei Lackbeschichtungen ist.

Die Erfindung wird nun anhand eines Ausführungsbeispiels unter Bezugnahme auf eine schematische Zeichnung erläutert.

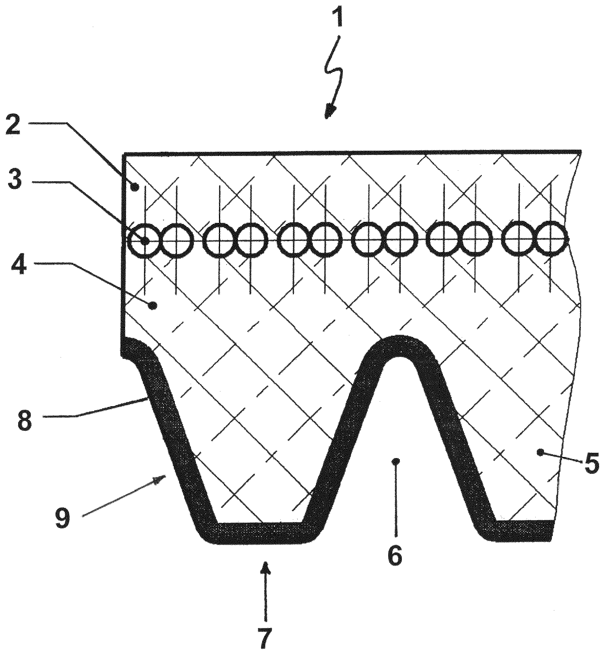

Die einzige Figur zeigt einen Antriebsriemen 1, der als Keilrippenriemen ausgebildet ist, mit einer Decklage 2 als Riemenrücken, einer Festigkeitsträgerlage mit in Längrichtung verlaufenden parallel angeordneten Zugträgern 3 in Form von Einzelcorden sowie mit einem Unterbau 4. Die Decklage und der Unterbau bilden den elastischen Grundkörper auf der Basis eines Vulkanisates, beispielsweise auf der Basis von EPDM. Der Unterbau weist eine Keilrippenstruktur auf, gebildet aus Rippen 5 und Rillen 6. Der Unterbau umfasst dabei die Kraftübertragungszone 9.

Die Beschichtung 8, die hier ausschließlich die Kraftübertragungszone 9 und die Rippenköpfe 7 erfasst, besteht ausschließlich aus einer einlagigen LLDPE-Folie. Die LLDPE-Folie wird dabei vor der Konfektion auf die Unterbaumischung aufgebracht.

Die Zugträger 3 bestehen beispielsweise aus Stahl, Polyamid, Aramid, Glasfasern, Kohlefasern, Basaltfasern, Polyethylentherephthalat (PET), Polyetheretherketon (PEEK) oder Polyethylen-2,6-naphthalat (PEN).

Die Decklage 2 kann frei von einer LLDPE-Beschichtung sein oder ebenfalls mit einem derartigen Beschichtungskonzept versehen sein. Die Beschichtung für die Decklage 2 kann beispielsweise auch aus einer Textilauflage oder einem Vlies nach dem Stand der Technik gebildet sein.

### Bezugszeichenliste

### (Teil der Beschreibung)

- 1: Antriebsriemen (Keilrippenriemen)
- 2: Decklage (Riemenrücken)
- 3: Zugträger in Form von Einzelcorden
- 4: Unterbau
- 5: Rippen
- 6: Rillen
- 7: Rippenköpfe
- 8: Beschichtung in Form wenigstens einer Folie mit wenigstens 50 Gew. -% LLDPE
- 9: Kraftübertragungszone

## Patentansprüche

1. Artikel mit einem elastischen Grundkörper auf der Basis eines Vulkanisates mit einer verschleißanfälligen Artikeloberfläche, die mit wenigstens einer Beschichtung (8) an wenigstens einer Artikeloberfläche (2, 9) versehen ist, **dadurch gekennzeichnet, dass** wenigstens eine Oberflächenbeschichtung (8) des Artikels aus wenigstens einer Folie aufgebaut ist, wobei die Folie 80 bis 100 Gew. -% eines linearen Polyethylens mit niedriger Dichte (LLDPE), d.h. mit einer Dichte zwischen 0,915 und 0,934 g/cm³ bei 20°C, enthält und wobei die Folie derart beschaffen ist, dass diese bei der Vulkanisation schmilzt und dabei einen festen Haftverbund von Grundkörper und Beschichtung bildet.

2. Artikel nach Anspruch 1, **dadurch gekennzeichnet, dass** dieser ein Antriebsriemen (1), Fördergurt, Schlauch, Luftfederbalg oder eine mehrschichtige Stoffbahn ist.

3. Artikel nach einem der Ansprüche 1 bis 2, **dadurch gekennzeichnet, dass** der Anteil an Alk-1-en in LLDPE 5 bis 12% beträgt.

4. Artikel nach einem der Ansprüche 1 bis 3, **dadurch gekennzeichnet, dass** die Folie ein oder mehrere Amidwachse enthält.

5. Artikel nach einem der Ansprüche 1 bis 4, **dadurch gekennzeichnet, dass** das Flächengewicht der Folie 1 bis 100 g/m² beträgt.

6. Artikel nach einem der Ansprüche 1 bis 5, **dadurch gekennzeichnet, dass** das Flächengewicht der Folie 10 bis 35 g/m² beträgt.

7. Artikel nach einem der Ansprüche 1 bis 6, **dadurch gekennzeichnet, dass** der elastische Grundkörper ein Vulkanisat auf der Basis einer vulkanisierten Kautschukmischung ist, enthaltend wenigstens eine Kautschukkomponente und Mischungsingredienzien.

8. Artikel nach einem der Ansprüche 1 bis 7, **dadurch gekennzeichnet, dass** das Vulkanisat und / oder die Folie peroxidisch vernetzt ist bzw. sind.

9. Verfahren zur Herstellung eines Artikels nach einem der Ansprüche 1 bis 8, **dadurch gekennzeichnet, dass** die Folie enthaltend 80 bis 100 Gew. -% LLDPE vor der Konfektionierung des Artikels auf die Mischung des Unterbaus (4) aufgebracht wird.

## Claims

1. Article having an elastic main body based on a vulcanizate having a wear-susceptible article surface having at least one coating (8) on at least one article surface (2, 9), **characterized in that** at least one surface coating (8) on the article is constructed from at least one self-supporting film, wherein the film contains from 80 to 100 wt% of a linear low density polyethylene (LLDPE), i.e. a linear polyethylene having a density between 0.915 and 0.934 g/cm³ at 20°C, and wherein the self-supporting film is constituted such that it melts in the course of vulcanization to form a firmly adhered combination of main body and coating.

2. Article according to Claim 1, **characterized in that** this article is a drive belt (1), a conveyor belt, a hose, an air spring lobe or a multilayered web.

3. Article according to either of Claims 1 and 2, **characterized in that** the proportion of alk-1-ene in LLDPE is from 5 to 12%.

4. Article according to any of Claims 1 to 3, **characterized in that** the self-supporting film contains one or more amide waxes.

5. Article according to any of Claims 1 to 4, **characterized in that** the basis weight of the self-supporting film is in the range from 1 to 100 g/m².

6. Article according to any of Claims 1 to 5, **characterized in that** the basis weight of the self-supporting film is in the range from 10 to 35 g/m².

7. Article according to any of Claims 1 to 6, **characterized in that** the elastic main body is a vulcanizate based on a vulcanized mixture of rubber, comprising at least one rubber component and mixture ingredients.

8. Article according to any of Claims 1 to 7, **characterized in that** the vulcanizate and/or the self-supporting film is or are a peroxidically crosslinked vulcanizate and/or self-supporting film.

9. Process for manufacturing an article according to any of Claims 1 to 8, **characterized in that** the self-supporting film containing from 80 to 100 wt% of LLDPE is applied to the mixture of substructure (4) before the step of fabricating the article.

## Revendications

1. Article comportant un corps de base élastique à base d'un vulcanisat avec une surface d'article sensible à l'usure, qui est munie d'au moins un revêtement (8) sur au moins une surface d'article (2, 9), **caractérisé en ce qu'**au moins un revêtement de surface (8) de l'article est constitué d'au moins une feuille, la feuille contenant de 80 à 100 % en poids d'un polyéthylène linéaire de faible densité (LLDPE), c'est-à-dire ayant une densité comprise entre 0,915 et 0,934 g/cm³ à 20° C, et dans lequel la feuille est constituée d'une manière telle qu'elle fonde lors de la vulcanisation et forme de ce fait une liaison adhérente résistante du corps de base avec le revêtement.

2. Article selon la revendication 1, **caractérisé en ce que** celui-ci est une courroie d'entraînement (1), une courroie transporteuse, un tuyau flexible, un soufflet d'amortisseur pneumatique ou une bande de matière multicouche.

3. Article selon l'une quelconque des revendications 1 à 2, **caractérisé en ce que**, la proportion d'alc-1-ène dans LLDPE vaut 5 à 12%.

4. Article selon l'une quelconque des revendications 1 à 3, **caractérisé en ce que** la feuille comprend une ou plusieurs cires d'amide.

5. Article selon l'une quelconque des revendications 1 à 4, **caractérisé en ce que** le grammage de la feuille vaut 1 à 100 g/m².

6. Article selon l'une quelconque des revendications 1 à 5, **caractérisé en ce que** le grammage de la feuille vaut 10 à 35g/m².

7. Article selon l'une quelconque des revendications 1 à 6, **caractérisé en ce que** le corps de base élastique est un vulcanisat à base d'un mélange de caoutchouc vulcanisé, contenant au moins un composant de caoutchouc et des ingrédients de mélange.

8. Article selon l'une quelconque des revendications 1 à 7, **caractérisé en ce que** le vulcanisat et/ou la feuille est ou sont réticulé(e)(s) par le peroxyde.

9. Procédé de fabrication d'un article selon l'une quelconque des revendications 1 à 8, **caractérisé en ce que** la feuille contenant 80 à 100 % en poids de LLDPE est appliquée sur le mélange de la structure sous-jacente (4) avant la confection de l'article.
